# EUROPÄISCHE PATENTSCHRIFT

(11) **EP 3 551 474 B1**
(45) Veröffentlichungstag und Bekanntmachung des Hinweises auf die Patenterteilung: **16.09.2020**
(21) Anmeldenummer: 17787161.3
(22) Anmeldetag: 19.10.2017
(51) Int. Cl.: B60C 11/03

(54) **FAHRZEUGLUFTREIFEN**
VEHICLE TIRES
PNEUMATIQUE DE VÉHICULE

(30) Priorität: 07.12.2016 DE 102016224369
(43) Veröffentlichungstag der Anmeldung: 16.10.2019
(73) Patentinhaber: Continental Reifen Deutschland GmbH, 30165 Hannover (DE)
(72) Erfinder: BRANDAU, Christian, 31542 Bad Nenndorf (DE); KRINGS, Stefan, 31547 Rehburg-Loccum (DE); SENG, Matthias, 30453 Hannover (DE)
(74) Vertreter: Finger, Karsten
(86) Internationale Anmeldenummer: PCT/EP2017/076651
(87) Internationale Veröffentlichungsnummer: WO 2018/103935

(56) Entgegenhaltungen:
- EP-A1- 2 353 884
- EP-A1- 3 045 326
- JP-A- 2000 229 505
- JP-A- 2009 120 055
- JP-A- 2009 274 669
- US-A- 4 962 801
- US-A1- 2011 192 514

## Beschreibung

Die Erfindung betrifft einen Fahrzeugluftreifen mit einem profilierten Laufstreifen, welcher zwei Schulterblockreihen mit durch Querrillen voneinander getrennten Profilblöcken und einen mittleren Laufstreifenbereich mit zumindest zwei in Umfangsrichtung umlaufenden, von Umfangsrillen begrenzten Profilblockreihen mit in axialer Richtung im Wesentlichen paarweise nebeneinander liegenden Profilblöcken aufweist, wobei die Profilblöcke in jeder Profilblockreihe durch zur Umfangsrichtung unter einem Winkel von 65° bis 80° verlaufende Querrillen voneinander getrennt sind, und wobei die in axialer Richtung im Wesentlichen paarweise nebeneinander liegenden Profilblöcke jeweils durch eine in Draufsicht gerade verlaufende Schrägrille voneinander getrennt sind, welche jeweils in eine Querrille zwischen den in Umfangsrichtung benachbarten Profilblöcken der weiter laufstreifenaußenseitig befindlichen Profilblockreihe übergeht, wobei jeder Profilblock der weiter laufstreifenaußenseitig befindlichen Profilblockreihe anstelle eines spitzwinkeligen Eckes zwischen den laufstreifeninnenseitig gelegenen Enden seiner einen die Querrille begrenzenden Profilblockkante und seiner die Schrägrille begrenzenden Profilblockkante mit einem in Draufsicht dreieckigen Blockelement versehen ist.

Ein derartiger Fahrzeugluftreifen ist beispielsweise aus der JP 2009 120 055 A bekannt. Der Laufstreifen dieses Fahrzeugluftreifens weist im mittleren Laufstreifenbereich eine im Bereich des Reifenzenits umlaufende Profilrippe und seitlich der Profilrippe jeweils zwei weitere Profilblockreihen mit paarweise nebeneinander liegenden Profilblöcken auf. Die diese Profilblöcke trennenden Querrillen sind zur axialen Richtung unter einem Winkel von 10° bis 50° orientiert, verlaufen daher zur Umfangsrichtung unter einem Winkel von 40° bis 80°. Die paarweise nebeneinander liegenden Profilblöcke weisen jeweils an einer ihrer die Querrillen begrenzenden Blockkante zwei in Draufsicht flach-dreieckige Blockelemente auf.

Aus der JP 2009 274 669 A ist ein Fahrzugluftreifen bekannt, welcher einen Laufstreifen mit einer in Draufsicht im Bereich des Reifenzenits zickzackförmig verlaufende, aus Profilblöcken bestehende zentrale Profilblockreihe aufweist. An jeder Seite der zentralen Profilblockreihe sind zwei mittlere Profilblockreihen ausgebildet, deren Profilblöcke paarweise nebeneinander liegen und durch Schrägrillen voneinander getrennt sind. Die in der näher zum Reifenzenit liegenden Profilblockreihe verlaufen Querrillen mit einem Rillenknick, sodass jeweils an einem Eckbereich der Profilblöcke ein in Draufsicht dreieckiges Blockelement vorhanden ist.

Ferner ist aus der EP 0 669 216 A1 ein PKW-Winterreifen mit einem asymmetrisch gestalteten Laufstreifenprofil bekannt, welches unterschiedlich gestaltete Profilstrukturen in den beiden Laufstreifenhälften aufweist. Der Laufstreifen besitzt schulterseitig jeweils eine Schulterblockreihe und im mittleren Laufstreifenbereich drei Profilblockreihen, deren Profilblöcke in Draufsicht parallelogrammförmig gestaltet sind.

Um das Auftreten von Aquaplaning zu verhindern, ist es vorteilhaft, in Laufstreifen von Fahrzeugluftreifen für eine gute Wasserableitung innerhalb der Bodenaufstandsfläche von der Laufstreifenmitte in die weiter außen liegenden Laufstreifenbereiche, beispielsweise dort verlaufende Umfangsrillen, sicherzustellen. Die in Laufstreifen im mittleren Bereich oft vorgesehenen im Wesentlichen parallelogrammförmig ausgestalteten Profilblöcke weisen einerseits in Umfangsrichtung verlaufende Blockkanten und andererseits unter einem spitzen Winkel von etwa 50° bis 70° zur Umfangsrichtung verlaufende Profilblockkanten auf. Die damit einhergehende geringe Neigung der Querrillen relativ zur Umfangsrichtung ist für die Wasserableitung nicht optimal. Eine mehr spitzwinkelige Ausgestaltung der Profilblöcke würde eine größere Neigung bewirken, bedingt aber zwei einander diagonal gegenüberliegende spitzwinkelige Blockecken, die gestaltungsbedingt umfangs-und querweicher sind als die mittleren Bereiche der Profilblöcke. Ungleichheiten in der Quersteifigkeit führen bekanntermaßen zu einer schlechteren Kraftübertragung quer zur Fahrtrichtung, insbesondere bei Kurvenfahrt. Darüber hinaus führen insbesondere lokale Ungleichmäßigkeiten in der Umfangssteifigkeit zu einem schlechteren Abriebbild. Der Erfindung liegt die Aufgabe zugrunde, bei einem Fahrzeugluftreifen der eingangs genannten Art für eine besonders gute Wasserableitung aus dem mittleren Bereich des Laufstreifens in zumindest einen seitlichen Bereich des Laufstreifens zu sorgen, wobei gleichzeitig ein gleichmäßigen Abrieb und gute Handlingeigenschaften bei Kurvenfahrt gewährleistet sein sollen.

Gelöst wird die gestellte Aufgabe erfindungsgemäß dadurch, dass die Schrägrille, welche die in axialer Richtung im Wesentlichen paarweise nebeneinander liegenden Profilblöcke voneinander trennt, in Draufsicht zur Umfangsrichtung unter einem Winkel von 20° bis zu 45° verläuft und an der Laufstreifenperipherie eine Breite von 4,0 mm bis 7,0 mm aufweist, wobei die an die die Schrägrille begrenzende Profilblockkante anschließende Blockelementkante durch eine Querrille, welche schmäler als die zwischen den in Umfangsrichtung benachbarten Profilblöcken der weiter laufstreifenaußenseitig befindlichen Profilblockreihe verlaufenden Querrillen ist, von einer Profilblockkante eines Profilblockes der weiter laufstreifeninnenseitig verlaufenden Profilblockreihe getrennt ist und zu dieser im Wesentlichen parallel verläuft.

Die schräg zur Umfangsrichtung und im Laufstreifen nach außen verlaufenden Schrägrillen gewährleisten gemeinsam mit den Querrillen zwischen den in Umfangsrichtung benachbarten Profilblöcken der im Laufstreifen weiter außen gelegenen Profilblockreihe eine gute Entwässerung des Laufstreifens Richtung äußeren Laufstreifenbereich, insbesondere in die die zuletzt genannte Profilblockreihe außenseitig begrenzende Umfangsrille. Ein für die Umfangs- und Quersteifigkeit ungünstiger spitzwinkeliger Blockeckbereich wird durch die dreieckigen Blockelemente an den ansonsten spitzwinkeligen Blockecken vermieden. In diesem Bereich vergleichmäßigt dieses dreieckige Blockelement die Länge des gesamten Blockelementes sowohl in axialer Richtung als auch in Umfangsrichtung und daraus resultierend die lokalen Steifigkeiten in beide Richtungen. Die erfindungsgemäße Maßnahme ist daher besonders günstig für einen gleichmäßigen Abrieb des Laufstreifens und die Handlingeigenschaften auf trockenen Fahrbahnen, insbesondere bei Kurvenfahrt. Die dreieckigen Blockelemente sind daher vorteilhaft in die benachbarten Profilstrukturen des Laufstreifens eingebunden.

Das erfindungsgemäße, dreieckige Blockelement kann an die jeweils gewünschte Beeinflussung der Umfangs- und der Quersteifigkeit an den betreffenden Blockecken hinsichtlich seiner Dimensionierung entsprechend angepasst werden. Bei einer bevorzugten Ausführung der Erfindung weist daher das Blockelement eine die Enden der Profilblockkanten verbindende in axialer Richtung verlaufende und gedachte Seite mit einer Länge von 9,0 mm bis 20,0 mm, insbesondere von bis 15,0 mm, auf. Des Weiteren ist es für ein gute Ausgewogenheit von Umfangs- und Quersteifigkeit besonders vorteilhaft, wenn die die Schrägrille begrenzende Profilblockkante mit der anschließenden Blockelementkante einen Winkel von 80° bis 100° einschließt und wenn die beiden Blockelementkanten des dreieckigen Blockelementes miteinander einen Winkel einschließen, welcher ebenfalls 80° bis 100° beträgt.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 schematisch eine Draufsicht auf einen Umfangsabschnitt eines Laufstreifens eines Fahrzeugluftreifens und
Fig. 2 Profilblöcke aus Fig. 1 in vergrößerter Darstellung.

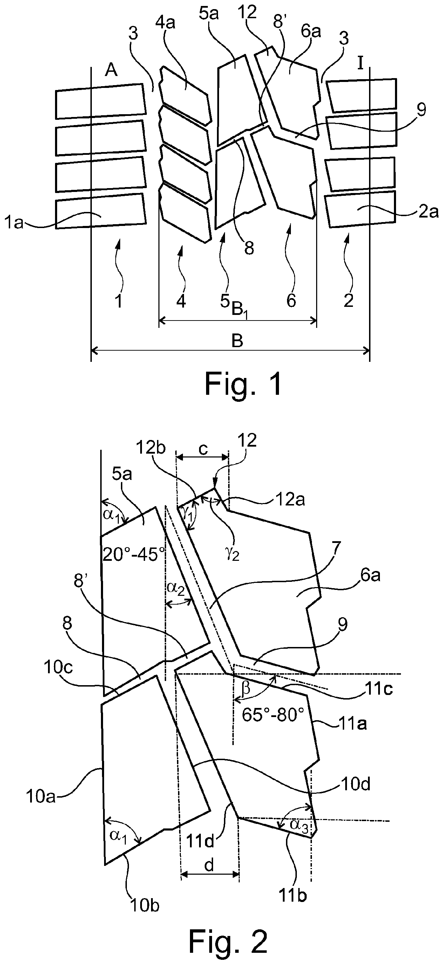

Fig. 1 zeigt eine Draufsicht auf einen Umfangsabschnitt eines Laufstreifens eines Fahrzeugluftreifens, insbesondere eines PKW-Reifens oder eines Reifens für Vans oder Light Trucks. Der sehr schematisch dargestellte Laufstreifen weist schulterseitig jeweils eine Schulterblockreihe mit Profilblöcken 1a, 2a und zwischen den Schulterblockreihen 1, 2, im mittleren Laufstreifenbereich, ebenfalls Profilblockreihen 4, 5, 6 mit Profilblöcken 4a, 5a, 6a, bei der gezeigten Ausführung daher drei Profilblockreihen auf. Zwischen jeder Schulterblockreihe 1, 2 und der dieser jeweils benachbarten Profilblockreihe 4, 6 verläuft jeweils eine breite und auf die vorgesehene Profiltiefe reichende Umfangsrille 3. Der mittlere Laufstreifenbereich erstreckt sich in axialer Richtung über eine Breite B₁ von 40% bis 70% der Bodenaufstandsflächenbreite B, wobei letztere der Breite des statisch ermittelten Footprints gemäß E.T.R.T.O. Standard (Last bei 70% der Tragfähigkeit bei einem Innendruck von 2,5 bar, Innendruck 85% von 2,9 bar) entspricht. Der beispielhaft dargestellte Laufstreifen ist ein sogenannter asymmetrisch gestalteter Laufstreifen, demnach ein Laufstreifen für einen Fahrzeugluftreifen, der, bezogen auf das Fahrzeug, derart zu montieren ist, dass sich bei montiertem Reifen ein bestimmter Laufstreifenbereich an der Außenseite und ein bestimmter Laufstreifenbereich an der Innenseite befindet. In Fig. 1 ist die linke Schulterblockreihe 1 der Außenschulter A, die rechte Schulterblockreihe 2 der Innenschulter I zugeordnet.

Die Profilblöcke 5a, 6a in den Profilblockreihen 5, 6 liegen im Wesentlichen paarweise nebeneinander, sind in Umfangsrichtung durch Querrillen 8, 9 voneinander getrennt und sind wegen der im mittleren Laufstreifenbereich günstigen höheren Umfangsteifigkeit mit einer relativ großen Umfangslänge versehen, die größte Umfangslänge beträgt je nach Pitchlänge 25 mm bis 50 mm. Um das Auftreten von Aquaplaning weitgehend zu vermeiden, ist ferner durch die Profilausgestaltung für eine gute Wasserableitung aus dem mittleren Laufstreifenbereich zur Seite, beim gezeigten Beispiel zu der außenseitig der Profilblockreihe 6 befindlichen breiten Umfangsrille 3 gesorgt. Bei der gezeigten Ausführung erfolgt die Wasserableitung aus dem mittleren Laufstreifenbereich zur erwähnten Umfangsrille 3 durch Schrägrillen 7 zwischen den im Wesentlichen paarweise nebeneinander liegenden Profilblöcken 5a, 6a der Profilblockreihen 5 6 und den an diese unmittelbar anschließenden Querrillen 9 zwischen den in Umfangsrichtung aufeinanderfolgenden Profilblöcken 6a der Profilblockreihe 6.

Die Profilblöcke 5a der Profilblockreihe 5 sind in Draufsicht im Wesentlichen Vierecke und weisen jeweils eine in Umfangsrichtung verlaufende Profilblockkante 10a, zwei im Wesentlichen parallel zueinander und unter einem Winkel α₁ von 50° bis 80° zur Umfangsrichtung verlaufende Profilblockkanten 10b und 10c sowie eine die Schrägrille 7 begrenzende Profilblockkante 10d auf, welche sich gegensinnig zu den Profilblockkanten 10b und 10c geneigt unter einem Winkel α₂ von 20° bis 45° zur Umfangsrichtung verläuft, sodass auch die Schrägrillen 4 unter dem Winkel α₂ in Richtung zur Schulterblockreihe 2 verlaufen.

Die Profilblöcke 6a der Profilblockreihe 6 weisen entlang der Umfangsrille 3 eine sich in Umfangsrichtung erstreckende Profilblockkante 11a auf, ferner zwei an die Profilblockkante 11a anschließende zumindest im Wesentlichen parallel zueinander verlaufende Profilblockkanten 11b und 11c, welche unter einem Winkel α₃ von 65° bis 80° zur Umfangsrichtung und gleichsinnig zur Schrägrille 7 geneigt verlaufen. Die Querrillen 9 verlaufen daher unter einem Winkel β von 65° bis 80° zur Umfangsrichtung. Die Neigung der Profilblockkanten 11b und 11c ist bezüglich der Umfangsrichtung gegensinnig zu jener der Profilblockkanten 10b und 10c der Profilblöcke 5a. Die vierte Profilblockkante 11d begrenzt jeden Profilblock 6a zur Schrägrille 7 und verläuft im Wesentlichen parallel zur Profilblockkante 10d der Profilblöcke 5a in einem Abstand von mindestens 4 mm, insbesondere bis zu 7 mm. Die Breite der Querrillen 8 zwischen den in Umfangsrichtung benachbarten Profilblöcken 6a ist etwas geringer als die Breite der der Schrägrillen 7 und beträgt insbesondere 2,0 mm bis 6,0 mm.

Zwischen den laufstreifeninnenseitig gelegenen Enden der Profilblockkante 11d und der Profilblockkante 11c ist jeder Profilblock 6a mit einem in Draufsicht dreieckigen Blockelement 12 versehen. Durch dieses dreieckige Blockelement 12 wird an dieser Stelle des Profilblockes 6a eine ungünstige spitzwinkelige Ecke durch Schnittstellen der Profilblockkanten 11d und 11c vermieden. Jedes dreieckige Blockelement 12 weist eine die Enden der Profilblockkanten 11c und 11d verbindende in axialer Richtung bzw. unter einem kleinen spitzten Winkel von bis zu 10 ° zur axialen Richtung verlaufende, gedachte Seite mit einer Länge c von 9,0 mm bis 20,0 mm, insbesondere bis 15,0 mm, auf. Die die Größe des Blockelementes 12 bestimmenden Blockelementkanten 12b und 12a sind kürzer, wobei die an die Profilblockkante 11d anschließende Blockelementkante 12b mit der Profilblockkante 11d einen Winkel γ₁ von 80° bis 100° einschließt. Die Blockelementkante 12b schließt mit der Blockelementkante 12a einen Winkel γ₂ ein, welcher ebenfalls 80° bis 100° beträgt. Dabei ist die Blockelementkante 12b durch eine schmale, vorzugsweise 3,0 mm bis 5,0 mm breite, in Verlängerung der Querrille 8 verlaufende Querrille 8' von einem Profilblock 5a getrennt. Die Blockelementkante 12a verläuft im Wesentlichen in Verlängerung einer Profilblockkante 10d.

Im mittleren Laufstreifenbereich können auch mehr als drei, vorzugsweise vier, in Umfangsrichtung umlaufende Profilblockreihen vorgesehen sein. In sämtlichen Profilblöcken des Laufstreifens können ferner Einschnitte beliebiger Ausgestaltung ausgebildet sein.

### Bezugsziffernliste

- 1, 2: Schulterblockreihe
- 1a, 2a: Profilblock
- 3: Umfangsrille
- 4, 5, 6: Profilblockreihe
- 4a, 5a, 6a: Profilblöcke
- 7: Schrägrille
- 8, 8': Querrille
- 9: Querrille
- 10a, 10b, 10c, 10d: Profilblockkante
- 11a, 11b, 11c, 11d: Profilblockkante
- 12: Blockelement
- 12a, 12b: Blockelementkante
- I: Innenschulter
- A: Außenschulter
- B₁: Breite
- B: Breite
- c: Länge
- α₁, α₂, α₃: Winkel
- β: Winkel
- γ₁, γ₂: Winkel

## Patentansprüche

1. Fahrzeugluftreifen mit einem profilierten Laufstreifen, welcher zwei Schulterblockreihen (1, 2) mit durch Querrillen voneinander getrennten Profilblöcken (1a, 2a) und einen mittleren Laufstreifenbereich mit zumindest zwei in Umfangsrichtung umlaufenden, von Umfangsrillen (3) begrenzten Profilblockreihen (5, 6) mit in axialer Richtung im Wesentlichen paarweise nebeneinander liegenden Profilblöcken (5a, 6a) aufweist, wobei die Profilblöcke (5a, 6a) in jeder Profilblockreihe (5, 6) durch zur Umfangsrichtung unter einem Winkel (β) von 65° bis 80° verlaufende Querrillen (8, 9) voneinander getrennt sind, und wobei die in axialer Richtung im Wesentlichen paarweise nebeneinander liegenden Profilblöcke (5a, 6a) jeweils durch eine in Draufsicht gerade verlaufende Schrägrille (7) voneinander getrennt sind, welche jeweils in eine Querrille (9) zwischen den in Umfangsrichtung benachbarten Profilblöcken (6a) der weiter laufstreifenaußenseitig befindlichen Profilblockreihe (6) übergeht,
wobei jeder Profilblock (6a) der weiter laufstreifenaußenseitig befindlichen Profilblockreihe (6) anstelle eines spitzwinkeligen Eckes zwischen den laufstreifeninnenseitig gelegenen Enden seiner einen die Querrille (9) begrenzenden Profilblockkante (11c) und seiner die Schrägrille (7) begrenzenden Profilblockkante (11d) mit einem in Draufsicht dreieckigen Blockelement (12) versehen ist,
**dadurch gekennzeichnet,**
**dass** die Schrägrille (7), welche die in axialer Richtung im Wesentlichen paarweise nebeneinander liegenden Profilblöcke (5a, 6a) voneinander trennt, in Draufsicht zur Umfangsrichtung unter einem Winkel (α₂) von 20° bis zu 45° verläuft und an der Laufstreifenperipherie eine Breite von 4,0 mm bis 7,0 mm aufweist,
wobei die an die die Schrägrille (7) begrenzende Profilblockkante (11d) anschließende Blockelementkante (12b) durch eine Querrille (8'), welche schmäler als die zwischen den in Umfangsrichtung benachbarten Profilblöcken (6a) der weiter laufstreifenaußenseitig befindlichen Profilblockreihe (6) verlaufenden Querrillen (9) ist, von einer Profilblockkante (10b) eines Profilblockes (5a) der weiter laufstreifeninnenseitig verlaufenden Profilblockreihe (5) getrennt ist und zu dieser im Wesentlichen parallel verläuft.

2. Fahrzeugluftreifen nach Anspruch 1, **dadurch gekennzeichnet, dass** das Blockelement (12) eine die Enden der Profilblockkanten (11c, 11d) verbindende in axialer Richtung verlaufende, gedachte Seite mit einer Länge (c) von 9,0 mm bis 20,0 mm, insbesondere bis 15,0 mm, aufweist.

3. Fahrzeugluftreifen nach Anspruch 1 oder 2, **dadurch gekennzeichnet, dass** die die Schrägrille (7) begrenzende Profilblockkante (11d) mit der anschließenden Blockelementkante (12b) einen Winkel (γ₁)vοn 80° bis 100° einschließt.

4. Fahrzeugluftreifen nach Anspruch 1 oder 2, **dadurch gekennzeichnet, dass** die Blockelementkanten (12a, 12b) miteinander einen Winkel (γ₂) einschließen., welcher ebenfalls 80° bis 100° beträgt.

## Claims

1. Pneumatic vehicle tyre with a profiled tread, which has two rows of shoulder bars (2) with tread bars (1a, 2a) separated from one another by transverse channels, and a middle tread region with at least two rows of tread bars (5, 6) running around in the circumferential direction and delimited by circumferential channels (3), with tread bars (5a, 6a) lying next to one another substantially in pairs in the axial direction, wherein the tread bars (5a, 6a) in each row of tread bars (5, 6) are separated from one another by transverse channels (8, 9) running at an angle (β) to the circumferential direction of 65° to 80°, and wherein the tread bars (5a, 6a) lying next to one another substantially in pairs in the axial direction are separated from one another in each case by an oblique channel (7) running straight in plan view, which respectively goes over into a transverse channel (9) between the tread bars (6a) adjacent in the circumferential direction of the row of tread bars (6) located further to the outside of the tread, wherein, instead of an acute-angled corner between the ends, on the inner side of the tread, of its tread bar edge (11c) delimiting the transverse channel (9) and its tread bar edge (11d) delimiting the oblique channel (7), each tread bar (6a) is provided with a bar element (12) that is triangular in plan view,
**characterized in that**, in plan view, the oblique channel (7), which separates the tread bars (5a, 6a) lying next to one another substantially in pairs in the axial direction from one another, runs at an angle (α₂) to the circumferential direction of 20° to 45° and has at the periphery of the tread a width of 4.0 mm to 7.0 mm,
wherein the bar element edge (12b) adjoining the tread bar edge (11d) delimiting the oblique channel (7) is separated from a tread bar edge (10b) of a tread bar (5a) of the row of tread bars (5) running further to the inside of the tread by a transverse channel (8'), which is narrower than the transverse channels (9) running between the tread bars (6a) adjacent in the circumferential direction of the row of tread bars (6) located further to the outside of the tread, and runs substantially parallel thereto.

2. Pneumatic vehicle tyre according to Claim 1, **characterized in that** the bar element (12) has an imaginary side, joining the ends of the tread bar edges (11c, 11d) and running in the axial direction, with a length (c) of 9.0 mm to 20.0 mm, in particular up to 15.0 mm.

3. Pneumatic vehicle tyre according to Claim 1 or 2, **characterized in that** the tread bar edge (11d) delimiting the oblique channel (7) forms with the adjoining bar element edge (12b) an angle (γ₁) of 80° to 100°.

4. Pneumatic vehicle tyre according to Claim 1 or 2, **characterized in that** the bar element edges (12a, 12b) form with one another an angle (γ₂), which is likewise 80° to 100°.

## Revendications

1. Pneu de véhicule avec une bande de roulement profilée, qui comprend deux séries de blocs d'épaulement (1, 2) avec des blocs de profilé (1a, 2a) séparés les uns des autres par des rainures transversales et une zone centrale de bande de roulement avec au moins deux séries de blocs de profilé (5, 6) s'étendant dans la direction circonférentielle, délimitées par des rainures circonférentielles (3), avec des blocs de profilé (5a, 6a) situés essentiellement en paires les uns à côté des autres dans la direction axiale, les blocs de profilé (5a, 6a) dans chaque série de blocs de profilé (5, 6) étant séparés les uns des autres par des rainures transversales (8, 9) s'étendant à un angle (β) de 65° à 80° par rapport à la direction circonférentielle, et les blocs de profilé (5a, 6a) situés essentiellement en paires les uns à côté des autres dans la direction axiale étant séparés les uns des autres respectivement par une rainure oblique (7) rectiligne vue en plan, qui se termine respectivement dans une rainure transversale (9) entre les blocs de profilé (6a) voisins dans la direction circonférentielle de la série de blocs de profilé (6) se trouvant plus loin du côté extérieur de la bande de roulement,
chaque bloc de profilé (6a) de la série de blocs de profilé (6) se trouvant plus loin du côté extérieur de la bande de roulement présentant, au lieu d'un angle aigu, un élément de bloc triangulaire (12) vu en plan, entre les extrémités situées du côté intérieur de la bande de roulement de son bord de bloc de profilé (11c) délimitant la rainure transversale (9) et de son bord de bloc de profilé (11d) délimitant la rainure oblique (7),
**caractérisé en ce que**
la rainure oblique (7), qui sépare les uns des autres les blocs de profilé (5a, 6a) situés essentiellement en paires les uns à côté des autres dans la direction axiale, s'étend, vue en plan, à un angle (α₂) de 20° à 45° par rapport à la direction circonférentielle et présente au niveau de la périphérie de bande de roulement une largeur de 4,0 mm à 7,0 mm,
le bord d'élément de bloc (12b) suivant le bord de bloc de profilé (11d) délimitant la rainure oblique (7) étant séparé par une rainure transversale (8'), qui est plus étroite que les rainures transversales (9) s'étendant entre les blocs de profilé (6a) voisins dans la direction circonférentielle de la série de blocs de profilé (6) se trouvant plus loin du côté extérieur de la bande de roulement, d'un bord de bloc de profilé (10b) d'un bloc de profilé (5a) de la série de blocs de profilé (5) s'étendant plus loin du côté intérieur de la bande de roulement, et étant essentiellement parallèle à celui-ci.

2. Pneu de véhicule selon la revendication 1, **caractérisé en ce que** l'élément de bloc (12) comprend un côté imaginaire s'étendant dans la direction axiale, reliant les extrémité des bords de bloc de profilé (11c, 11d), ayant une longueur (c) de 9,0 mm à 20,0 mm, notamment de jusqu'à 15,0 mm.

3. Pneu de véhicule selon la revendication 1 ou 2, **caractérisé en ce que** le bord de bloc de profilé (11d) délimitant la rainure oblique (7) présente un angle (γ₁) de 80° à 100° avec le bord d'élément de bloc suivant (12b).

4. Pneu de véhicule selon la revendication 1 ou 2, **caractérisé en ce que** les bords d'élément de bloc (12a, 12b) présentent entre eux un angle (γ₂), qui est également de 80° à 100°.
